# EUROPÄISCHE PATENTSCHRIFT

(11) **EP 1 233 226 B1**
(45) Veröffentlichungstag und Bekanntmachung des Hinweises auf die Patenterteilung: **17.12.2003**
(21) Anmeldenummer: 02003377.5
(22) Anmeldetag: 13.02.2002
(51) Int. Cl.: F16L 33/12

(54) **Schlauchkupplung**
Hose coupling
Raccord pour tuyaux flexibles

(30) Priorität: 14.02.2001 DE 10107112
(43) Veröffentlichungstag der Anmeldung: 21.08.2002
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: COHAUSZ & FLORACK

(56) Entgegenhaltungen:
- DE-A- 3 601 093
- DE-U- 7 039 086

## Beschreibung

Die Erfindung betrifft eine Schlauchkupplung, bestehend aus einer Schlauchtülle, einer zwei Teilschalen aufweisenden Schelle, einem Spannhebel und wenigstens einer Schließfeder, wobei die beiden Teilschalen gelenkig mit einem auf der Schlauchtülle angeordneten Tüllenflansch verbunden sind und wobei der am freien Umfangsende einer der Teilschalen angelenkte Spannhebel über die Schließfeder(n) mit der anderen Teilschale verbunden ist.

Aus der Praxis sind derartige Schlauchkupplungen in vielfältigen Ausführungen bekannt. Zur Verbindung von Schlauchtülle bzw. Tüllenflansch mit den Teilschalen werden gewöhnlich Schrauben oder Niete eingesetzt. Schraubverbindungen sind nachteilig, da niemals völlig ausgeschlossen werden kann, dass sich diese Verbindung im späteren Einsatz lösen kann. Eine Nietverbindung hat diesen Nachteil zwar nicht, doch ist sie in der Herstellung aufwendiger. Eine bekannte Schlauchkupplung ist beispielsweise in der DE 3 601 093 A1 beschrieben.

Der Erfindung liegt die Aufgabe zu Grunde, die eingangs genannte und zuvor näher beschriebene Schlauchkupplung so auszugestalten und weiterzubilden, dass auf das Nieten bzw. Verschrauben des Gelenkpunktes vollständig verzichtet werden kann.

Gelöst wird diese Aufgabe bei einer Schlauchkupplung mit den Merkmalen des Oberbegriffes von Patentanspruch 1 dadurch, dass die beiden Teilschalen an ihrem das Gelenk bildenden Umfangsende jeweils einen Zapfen aufweisen, dass jeder Zapfen in eine Öffnung des Tüllenflansches eingreift und dass die beiden Teilschalen in zusammengeklappter Stellung sichernd ineinander greifen.

Durch die Erfindung ist es nunmehr möglich, das Gelenk zwischen Teilschalen und Schlauchtülle ohne Niet- oder Schraubverbindung lediglich durch die besondere Ausgestaltung der ohnehin vorhandenen Konstruktionsteile zu ermöglichen.

Nach einer weiteren Lehre der Erfindung greifen beide Zapfen in eine gemeinsame Öffnung im Tüllenflansch ein. Dies ist aus Herstellungsgründen besonders zweckmäßig. Es ist jedoch im Rahmen der Erfindung auch möglich, für jeden Zapfen eine eigene Öffnung oder Ausnehmung im Tüllenflansch vorzusehen.

Eine weitere Ausgestaltung der Erfindung sieht vor, dass der Tüllenflansch als Öffnung ein sich radial zur Tüllenachse erstreckendes Langloch aufweist. Auf diese Weise ist zuverlässig gewährleistet, dass ausreichender Raum für die Montage der beiden Teilschalen vorhanden ist, ohne dass in diesem "Gelenk" zuviel Spiel entsteht.

In weiterer Ausbildung der Erfindung weisen die Zapfen einen rechteckigen Querschnitt auf. Wenn die äußeren Abmessungen des Rechteckquerschnittes auf den Durchmesser des Langlochs abgestimmt sind, lässt sich eine spielfreie Radialsicherung beider Teilschalen erreichen.

Im Falle der Ausgestaltung mit einer gemeinsamen Öffnung im Tüllenflansch sieht eine weitere Lehre der Erfindung vor, dass eine Teilschale an ihrem den Zapfen bildenden Ende gekröpft ausgebildet ist. Auf diese Weise haben beide Zapfen innerhalb der Öffnung hintereinander Platz. Es ist jedoch alternativ auch möglich, wenn auch konstruktiv aufwendiger, beide Teilschalen mit entsprechend aufeinander abgestimmten Kröpfungen zu versehen.

Gemäß einer weiteren Ausführung der Erfindung bestehen die Zapfen aus gehärtetem Stahl. Dadurch ist zuverlässig gewährleistet, dass die Zapfen auch nach längerem Gebrauch nicht zu einem Ausleiern des Gelenkes oder der gesamten Schelle führen.

Nach einer weiteren Ausbildung der Erfindung sind zur axialen Sicherung die das Gelenk bildenden Umfangsenden beider Teilschalen so aufeinander abgestimmt, dass eine Teilschale in zusammengeklappter Stellung die andere Teilschale umgreift. Dazu kann zweckmäßiger weise die eine Teilschale eine mit der anderen Teilschale korrespondierende Kröpfung aufweisen. Damit ist sichergestellt, dass in vormontiertem Zustand beide Teilschalen der erfindungsgemäßen Schlauchkupplung nicht in axialer Richtung verschiebbar sind.

Gleichzeitig oder alternativ ist es auch möglich, dass der Spannhebel und die Schließfeder derart mit den Teilschalen verbunden sind, dass eine axial Bewegung der Teilschalen zuverlässig ausgeschlossen ist.

Die Montage der erfindungsgemäßen Schlauchkupplung erfolgt folgendermaßen:

Zunächst werden die Teilschalen der Schlauchverbindung axial mit ihren Zapfen in die Öffnung(en) des Tüllenflansches geschoben, anschließend werden die Teilschalen radial umgelegt, so dass in zusammengeklappter Stellung die Einzelteile nicht mehr axial auseinander geschoben werden können. Auch lassen sich die Teilschalen in zusammengeklappter Stellung nicht mehr aus der Öffnung des Tüllenflansches heraus bewegen. Nachdem die beiden Teilschalen zusammengeklappt sind, wird der Spannhebel, der vorher mit der Schließfeder montiert worden ist, mit dem freien, abgewinkelten Ende der Schließfeder in einer Aussparung der einen Teilschale eingeklinkt, danach werden die andere Teilschale und der Spannhebel, beispielsweise mit einem Niet, fest miteinander verbunden.

Die gesamte Einheit der so hergestellten Schlauchkupplung lässt sich somit nicht mehr lösen, da nach Anbringen des Niets in dem Drehgelenk zwischen Spannhebel und Teilschale beide Teilschalen nur soweit aufgehen können, wie der Spannhebel mit der Schließfeder das Aufklappen erlaubt. In dieser Stellung ist es leicht möglich, die Enden der zu verbindenden Schläuche auf die Schlauchtülle zu schieben, jedoch ist ein Ausrasten oder ein Auseinanderschieben im Gelenk im Bereich des Tüllenflansches nicht mehr möglich.

Die Erfindung wird nachfolgend anhand einer lediglich ein bevorzugtes Ausführungsbeispiel darstellenden Zeichnung erläutert. In der Zeichnung zeigen
- Fig. 1: die wesentlichen Elemente der Schlauchkupplung in Montagestellung im Querschnitt,
- Fig. 2: den Gegenstand aus Fig. 1 in Draufsicht von unten, teilweise aufgebrochen,
- Fig. 3: den Gegenstand aus Fig. 1 in teilweise zusammengeklapptem Zustand im Querschnitt,
- Fig. 4: eine Vergrößerung des Gelenkpunktes (strichpunktierter Kreis) aus Fig. 3,
- Fig. 5: den Gegenstand aus Fig. 1 mit auf die Schlauchtülle aufgeschobenen Schlauchenden im zusammengeklappten Zustand in Draufsicht, teilweise aufgeschnitten,
- Fig. 6: die fertig montierte erfindungsgemäße Schlauchkupplung in geöffneter Stellung in Seitenansicht und
- Fig. 7: die fertig montierte Schlauchkupplung in Schließstellung in Seitenansicht.

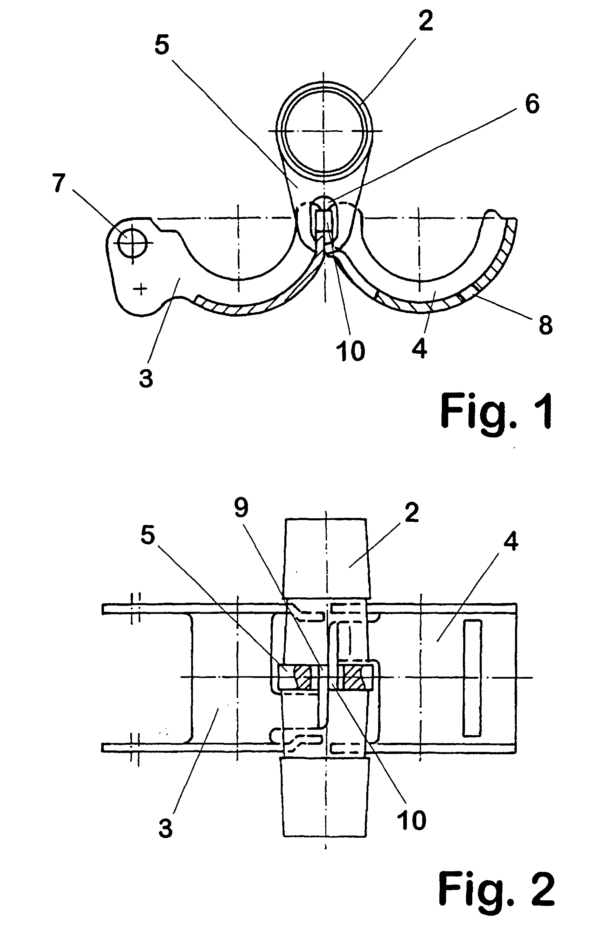

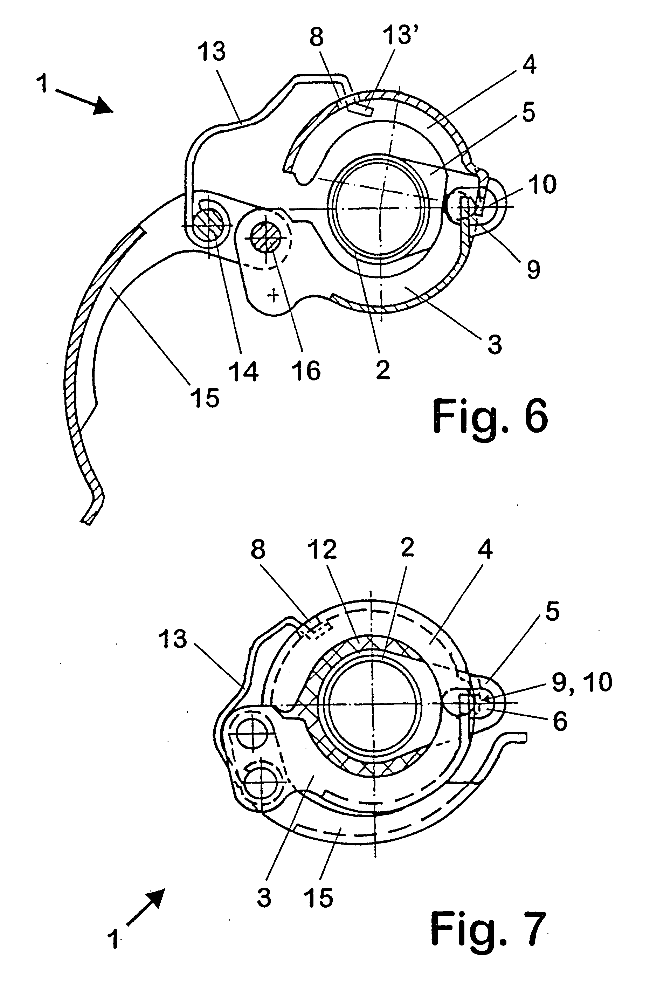

In den Fig. 1 bis 3 sind die wesentlichen Teile der in den Fig. 6 und 7 komplett dargestellten Schlauchkupplung 1 zur besseren Erläuterung der Erfindung einzeln dargestellt. Dabei zeigen die Fig. 1 und 2 die Montagestellung dieser Einzelteile. Dies sind im einzelnen eine Schlauchtülle 2 und zwei Teilschalen, die im folgenden als Unterteil 3 und Oberteil 4 bezeichnet werden. Die Schlauchtülle 2 weist einen Tüllenflansch 5 auf, der im dargestellten und insoweit bevorzugten Ausführungsbeispiel mit einer als Langloch ausgebildeten Öffnung 6 versehen ist. Ferner weisen das Unterteil 3 eine Bohrung 7 und das Oberteil 4 eine Aussparung 8 auf, welche, wie aus Fig. 2 ersichtlich ist, als Schlitz ausgeführt ist. Zur besseren Darstellung ist der Tüllenflansch 5 der Schlauchtülle 2 in Fig. 2 bis zu seiner Öffnung 6 aufgebrochen dargestellt. Aus Fig. 2 geht deutlich hervor, dass sowohl das Unterteil 3 als auch das Oberteil 4 jeweils einen Zapfen 9 bzw. 10 aufweisen, die in die Öffnung 6 des Tüllenflansches 5 eingreifen.

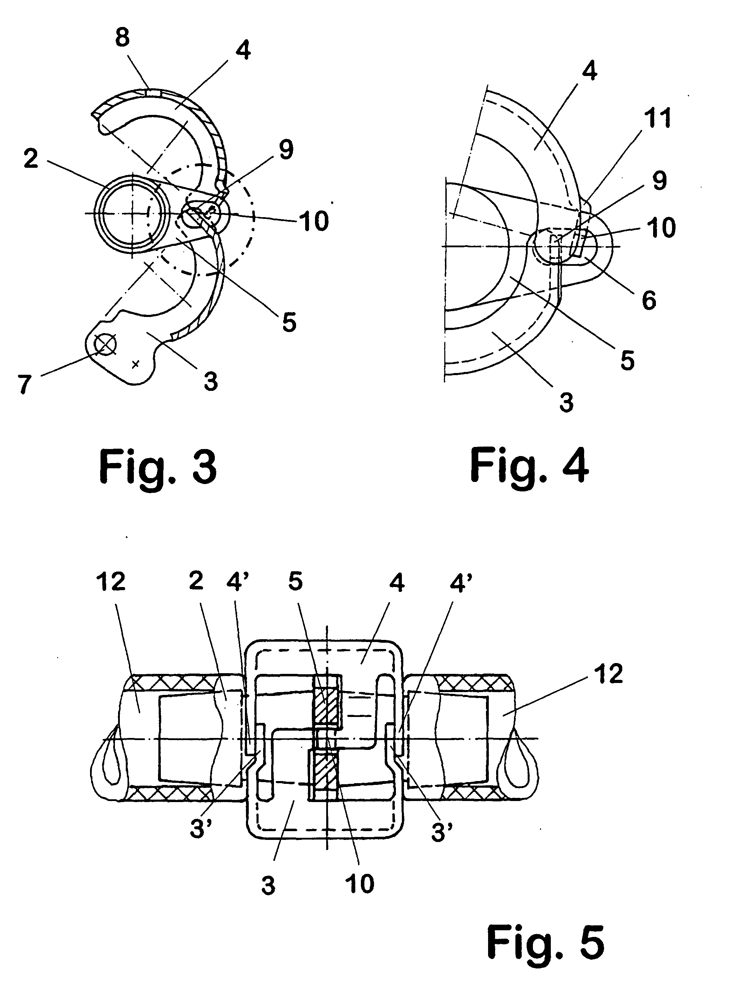

In den Fig. 1 und 2 ist also die Vormontagestellung dargestellt; es ist schnell ersichtlich, dass zur Vormontage der genannten Einzelteile zunächst das Unterteil 3 und das Oberteil 4 mit ihren jeweiligen Zapfen 9 und 10 axial in die Öffnung 6 des Tüllenflansches 5 geschoben werden. Dann werden zur weiteren Montage das Unterteil 3 und das Oberteil 4 in Richtung Schlauchtülle 2 geklappt, wie aus Fig. 3 hervorgeht. Das Gelenk im Inneren des strichpunktierten Kreises in Fig. 3 ist als Fig. 4 noch einmal vergrößert dargestellt. Hier wird deutlich, dass das Oberteil 4 eine Kröpfung 11 aufweist, so dass die Zapfen 9 und 10, welche im dargestellten und insoweit bevorzugten Ausführungsbeispiel einen rechteckigen Querschnitt aufweisen, in geschlossener Stellung der erfindungsgemäßen Schlauchkupplung 1 parallel aufeinander liegen können. Zweckmäßigerweise sind die geometrischen Abmessungen der Zapfen 9 und 10 derart auf den Durchmesser der Bohrung 6 abgestimmt, dass im geschlossenen Zustand eine spielfreie Radialsicherung von Unterteil 3 und Oberteil 4 erreicht wird.

Fig. 5 zeigt die zuvor beschriebenen Einzelteile 2, 3 und 4 mit jeweils aufgeschobenen Schlauchenden 12. Auch hier ist der besseren Übersicht halber wieder der Tüllenflansch 5 im Bereich seiner Öffnung 6 aufgeschnitten dargestellt. Der Zapfen 10 des Oberteils 4 verdeckt dabei das Ende des Zapfens 9 des Unterteils 3. Aus dieser Ansicht geht klar hervor, daß das Unterteil 3 am gelenkseitigen Ende zwei gekröpfte Stege 3' aufweist, die - im zusammengeklappten Zustand - von den entsprechenden Stegen 4' des Oberteils 4 umfasst werden. Durch diese Ausgestaltung lassen sich die beiden Teilschalen nicht mehr axial bewegen.

In den Fig. 6 und 7 ist die erfindungsgemäße Schlauchkupplung 1 noch einmal vollständig, einmal in geöffneter Stellung und einmal in Schließstellung, dargestellt. In beiden Stellungen lassen sich, wie erwähnt, Unterteil 3 und Oberteil 4 nicht mehr aus der Öffnung 6 des Tüllenflansches 5 heraus bewegen.

Nach der axialen Vormontage von Schlauchtülle 2 mit Unterteil 3 und Oberteil 4 und ihrem Zusammenklappen in radialer Richtung wird eine Schließfeder 13, die gelenkig um einen Stift 14 mit einem Spannhebel 15 verbunden ist, mit ihrem freien, abgewinkelten Ende 13' in die schlitzartige Aussparung 8 des Oberteils 4 eingeklinkt. Nachdem das Unterteil 3 und der Spannhebel 15 mit einem Niet 16 fest miteinander verbunden worden sind, ist die Montage der erfindungsgemäßen Schlauchkupplung beendet (Fig. 6).

Schließlich ist in Fig. 7 die Schlauchkupplung 1 in Schließstellung gezeigt, wobei nach dem Umlegen des als Kniehebel ausgebildeten Spannhebels 15 die auf die Schlauchtülle 2 aufgeschobenen Schlauchenden 12 von den die Schelle bildenden Unter- und Oberteilen 3, 4 auf die Schlauchtülle 2 gepresst werden. Hier ist deutlich zu erkennen, dass die beiden einen rechteckigen Querschnitt aufweisenden Zapfen 9 und 10 innerhalb des Langlochs 6 eng benachbart aneinanderliegen.

## Patentansprüche

1. Schlauchkupplung, bestehend aus einer Schlauchtülle (2), einer zwei Teilschalen (3, 4) aufweisenden Schelle, einem Spannhebel (15) und wenigstens einer Schließfeder (13), wobei die beiden Teilschalen (3, 4) gelenkig mit einem auf der Schlauchtülle (2) angeordneten Tüllenflansch (5) verbunden sind und wobei der am freien Umfangsende einer der Teilschalen (3) angelenkte Spannhebel (15) über die Schließfeder (13) bzw. Schließfedern mit der anderen Teilschale (4) verbunden ist,
**dadurch gekennzeichnet, dass**
die beiden Teilschalen an ihrem das Gelenk bildenden Umfangsende jeweils einen Zapfen (9, 10) aufweisen, dass jeder Zapfen (9, 10) in eine Öffnung (6) des Tüllenflansches (5) eingreift und dass die beiden Teilschalen (3, 4) in zusammengeklappter Stellung sichernd ineinander greifen.

2. Schlauchkupplung nach Anspruch 1,
**dadurch gekennzeichnet, dass**
die Zapfen (9, 10) in eine gemeinsame Öffnung (6) im Tüllenflansch (5) eingreifen.

3. Schlauchkupplung nach Anspruch 2,
**dadurch gekennzeichnet, dass**
der Tüllenflansch (5) als Öffnung (6) ein sich radial zur Tüllenachse erstreckendes Langloch aufweist.

4. Schlauchkupplung nach einem der Ansprüche 1 bis 3,
**dadurch gekennzeichnet, dass**
die Zapfen (9, 10) einen rechteckigen Querschnitt aufweisen.

5. Schlauchkupplung nach Ansprüche 2 bis 4,
**dadurch gekennzeichnet, dass**
eine Teilschale (4) an ihrem den Zapfen (10) bildenden Ende gekröpft ausgebildet ist.

6. Schlauchkupplung nach Ansprüche 2 bis 4,
**dadurch gekennzeichnet, dass**
beide Teilschalen an ihren die Zapfen bildenden Enden gekröpft ausgebildet sind.

7. Schlauchkupplung nach Ansprüche 1 bis 6,
**dadurch gekennzeichnet, dass**
die Zapfen (9, 10) aus gehärtetem Stahl bestehen.

8. Schlauchkupplung nach Ansprüche 1 bis 7,
**dadurch gekennzeichnet, dass**
zur axialen Sicherung die das Gelenk bildenden Umfangsenden beider Teilschalen (3, 4) so aufeinander abgestimmt sind, dass eine Teilschale (4) in zusammengeklappter Stellung die andere Teilschale (3) umgreift.

9. Schlauchkupplung nach Anspruch 8,
**dadurch gekennzeichnet, dass**
die eine Teilschale (3) eine mit der anderen Teilschale (4) korrespondierende Kröpfung (11) aufweist.

10. Schlauchkupplung nach Ansprüche 1 bis 9,
**dadurch gekennzeichnet, dass**
der Spannhebel (15) und die Schließfeder (13) derart mit den Teilschalen (3, 4) verbunden sind, dass eine axiale Bewegung der Teilschalen (3, 4) ausgeschlossen ist.

11. Schlauchkupplung nach Ansprüche 1 bis 10,
**dadurch gekennzeichnet, dass,**
bevor der Spannhebel (15) gelenkig mit der anderen Teilschale (3) verbunden wird, die gelenkig auf dem Spannhebel (15) montierte Schließfeder (13) mit ihrem freien, abgewinkelten Ende derart in eine Aussparung (8) der einen Teilschale (4) eingreift, dass sich auch bei geöffneter Schlauchkupplung (1) die einzelnen Teile nicht mehr voneinander lösen lassen.

## Claims

1. A hose coupling consisting of a hose nozzle (2), a clamp comprising two partial shells (3, 4), a tension lever (15) and at least one closing spring (13), wherein the two partial shells (3, 4) are connected in an articulated fashion to a nozzle flange (5) arranged on the hose nozzle (2), and wherein the tension lever (15) that this coupled to the free peripheral end of one partial shell (3) is connected to the other partial shell (4) by means of the closing spring (13) or closing springs, respectively,
**characterized in that**
the two partial shells respectively contain a pin (9, 10) on their peripheral end that forms the joint, **in that** each pin (9, 10) engages into an opening (6) in the nozzle flange (5), and **in that** the two partial shells (3, 4) engage into one another in a secured fashion in the assembled state.

2. The hose coupling according to Claim 1,
**characterized in that**
the pins (9, 10) engage into a common opening (6) in the nozzle flange (5).

3. The hose coupling according to Claim 2,
**characterized in that**
the nozzle flange (5) comprises as the opening (6) an oblong hole that extends radially with respect to the nozzle axis.

4. The hose coupling according to one of Claims 1-3,
**characterized in that**
the pins (9, 10) have a rectangular cross section.

5. The hose coupling according to Claims 2-4,
**characterized in that**
one partial shell (4) is realized in an offset fashion on its end that forms the pin (10).

6. The hose coupling according to Claims 2-4,
**characterized in that**
both partial shells are realized in an offset fashion on their ends that form the pins.

7. The hose coupling according to Claims 1-6,
**characterized in that**
the pins (9, 10) consist of hardened steel.

8. The hose coupling according to Claims 1-7,
**characterized in that**
the peripheral ends of both partial shells (3, 4) which form the joint are adapted to one another such that one partial shell (4) encompasses the other partial shell (3) in the assembled state in order to axially secure the coupling.

9. The hose coupling according to Claim 8,
**characterized in that**
one partial shell (3) has an offset (11) that corresponds to the other partial shell (4).

10. The hose coupling according to Claims 1-9,
**characterized in that**
the tension lever (15) and the closing spring (13) are connected to the partial shells (3, 4) in such a way that an axial movement of the partial shells (3, 4) is prevented.

11. The hose coupling according to Claims 1-10,
**characterized in that**,
before the tension lever (15) is connected in an articulated fashion to the partial shell (3), the closing spring (13) that is mounted in an articulated fashion on the tension lever (15) engages into a recess (8) in the other partial shell (4) with its free, angled end in such a way that the individual parts can no longer be separated from one another, namely even if the hose coupling (1) is opened.

## Revendications

1. Raccord pour tuyau, constitué par une douille (2) pour tuyau, un collier formé de deux parties de coque (3, 4), un levier de serrage (15) et au moins un ressort de fermeture (13), les deux parties (3, 4) de coque étant reliées de façon articulée à une bride de douille (5) disposée sur la douille (2) pour tuyau et le levier de serrage (15) articulé sur l'extrémité périphérique libre de l'une des parties (3) de coque étant relié à l'autre partie de coque (4) par l'intermédiaire d'un ressort de fermeture (13) ou de ressorts de fermeture,
**caractérisé en ce que** les deux parties de coque comportent chacune, sur leur extrémité périphérique formant l'articulation, un téton (9, 10), que chaque téton (9, 10) s'engage dans une ouverture (6) de la bride de douille (5) et que les deux parties (3, 4) de coque s'engagent l'une dans l'autre d'une manière bloquée dans une position rabattue l'une sur l'autre.

2. Raccord pour tuyau selon la revendication 1, **caractérisé en ce que** les tétons (9, 10) s'engagent dans une ouverture commune (6) dans la bride de douille (5).

3. Raccord pour tuyau selon la revendication 2, **caractérisé en ce que** la bride de douille (5) comporte, en tant qu'ouverture (6), un trou allongé qui s'étend radialement par rapport à l'axe de la douille.

4. Raccord pour tuyau selon l'une des revendications 1 à 3, **caractérisé en ce que** les tétons (9, 10) possèdent une section transversale rectangulaire.

5. Raccord pour tuyau selon l'une des revendications 2 à 4, **caractérisé en ce qu'**une partie (4) de coque est réalisée avec une forme coudée au niveau de son extrémité formant le téton (10).

6. Raccord pour tuyau selon l'une des revendications 2 à 4, **caractérisé en ce que** les deux parties de coque sont réalisées avec une forme coudée au niveau de leurs extrémités formant les tétons.

7. Raccord pour tuyau selon l'une des revendications 1 à 6, **caractérisé en ce que** les tétons (9, 10) sont réalisés en acier trempé.

8. Raccord pour tuyau selon l'une des revendications 1 à 7, **caractérisé en ce que** pour le blocage axiale, les extrémités périphériques, formant l'articulation, des deux parties (3, 4) de coque sont accordées l'une sur l'autre de telle sorte qu'une partie (4) de coque entoure l'autre partie (3) de coque, lorsque les parties sont rabattues l'une sur l'autre.

9. Raccord pour tuyau selon la revendication 8, **caractérisé en ce qu'**une partie (3) de coque possède une partie coudée (11) qui correspond à l'autre partie (4) de la coque.

10. Raccord pour tuyau selon l'une des revendications 1 à 9, **caractérisé en ce que** le levier de serrage (15) et le ressort de fermeture (13) sont reliés aux parties (3, 4) de coque de telle sorte qu'un déplacement axial des parties (3, 4) de coque est exclu.

11. Raccord pour tuyau selon l'une des revendications 1 à 10, **caractérisé en ce qu'**avant que le levier de serrage (15) soit relié d'une manière articulée à l'autre partie (3) de coque, le ressort de fermeture (13), qui est monté de manière articulée sur le levier de serrage (15), s'engage par son extrémité coudée libre dans un évidement (8) d'une partie (4) de coque de telle sorte que même dans le cas où le raccord pour tuyau (1) est ouvert, les différentes pièces ne peuvent plus être détachées l'une de l'autre.
